# EUROPEAN PATENT APPLICATION

(11) **EP 4 729 306 A1**
(43) Date of publication of application: **22.04.2026**
(21) Application number: 24823495.7
(22) Date of filing: 17.06.2024
(51) Int. Cl.: B60C 9/18, B60C 1/00, B60C 11/00, C08K 3/04, C08K 3/36, C08K 5/31, C08K 5/44, C08L 9/00

(54) **HEAVY-LOAD PNEUMATIC TIRE**

(30) Priority: 16.06.2023 JP 2023099172
(71) Applicant: The Yokohama Rubber Co., Ltd., Hiratsuka-shi, Kanagawa 254-8601 (JP)
(72) Inventor: AIMU, Keisuke, Hiratsuka-shi, Kanagawa 254-8601 (JP)
(74) Representative: Dilg, Haeusler, Schindelmann Patentanwaltsgesellschaft mbH
(86) International application number: PCT/JP2024/021846
(87) International publication number: WO 2024/257882

(57) **Abstract**

Provided is a heavy-duty pneumatic tire that maintains or improves rolling resistance, uneven wear resistance performance, and durability and provides all of them in a well-balanced and highly compatible manner. In a heavy-duty pneumatic tire, a tread rubber layer (10) is made of a tread rubber composed of a rubber composition in which 60 parts by mass or less of a filler containing carbon black and silica is blended per 100 parts by mass of a rubber component containing 90 mass% or more of isoprene-based rubber and in which a blending ratio between an amount of the carbon black and an amount of the silica in the filler ranges from 3:2 to 1:1, a belt cushion layer (40) is made of a belt cushion rubber composed of a rubber composition in which 45 parts by mass or less of carbon black is blended in per 100 parts by mass of a rubber component containing 90 mass% or more of isoprene-based rubber, and a hardness Hc of the tread rubber and a hardness Hb of the belt cushion rubber satisfy a relationship 1.2 ≤ Hc/Hb ≤ 1.5.

## Description

### Technical Field

The present invention relates to a heavy-duty tire including a belt cushion layer disposed between an end portion of a belt layer in a tire width direction and a carcass layer.

### Background Art

Since tires used on vehicles such as trucks and buses (heavy-duty pneumatic tires) are subjected to a larger load than the tires for passenger vehicles, excellent wear resistance performance is important. Even heavy-duty pneumatic tires tend to be prone to uneven wear, such as localized wear in a shoulder portion, when there are many opportunities to travel at high speeds. This uneven wear can cause the primary lifespan of the tire to end before the entire tread portion wears out, and there is therefore a need to improve uneven wear resistance. On the other hand, as described above, when there are many opportunities to travel at high speeds, there are fewer opportunities to brake and drive when traveling at high speeds (for example, compared to the case of traveling in urban areas). Therefore, the rate at which wear progresses is slower, and as a result, the primary lifespan of the tire tends to be longer (because the wear rate is slower, it tends to take longer for the tire to reach the end of its life due to total wear or uneven wear). Therefore, the tire body (tire frame) is also required to have excellent durability. In addition, with growing concern about global environmental issues, environmental regulations become stricter for heavy-duty tires as well, and further improvements in fuel economy performance are awaited.

For example, Patent Document 1 proposes that silica is blended into a rubber component mainly composed of natural rubber, and that a specific silane coupling agent is blended in to improve dispersion of the silica, thereby improving fuel economy performance in addition to wear resistance performance. However, such measures alone cannot sufficiently improve the aforementioned uneven wear resistance and the like. A known means of improving uneven wear resistance is to increase the hardness of a tread rubber and a belt cushion rubber that are disposed in a shoulder portion of a tire. Known methods for increasing the hardness of a rubber include increasing a crosslink density and increasing the amount of a filler, but increasing the crosslink density raises concerns about a deterioration in durability of a belt cushion, and increasing the amount of the filler raises concerns about an impact on fuel economy performance due to increased heat generation. For these reasons, it is difficult for tires equipped with a tread rubber and a belt cushion rubber to provide rolling resistance, uneven wear resistance performance, and durability in a compatible manner, and measures to provide all of them in a well-balanced and highly compatible manner are awaited.

### Citation List

### Patent Literature

Patent Document 1: JP 2019-056068 A

### Summary of Invention

### Technical Problem

An object of the present invention is to provide a heavy-duty pneumatic tire equipped with a tread rubber and a belt cushion rubber, which maintains or improves rolling resistance, uneven wear resistance performance, and durability and provides all of them in a well-balanced and highly compatible manner.

### Solution to Problem

A heavy-duty pneumatic tire of an embodiment of the present invention, which achieves the above-mentioned object, includes: a tread portion extending in a tire circumferential direction and having an annular shape; a pair of sidewall portions respectively disposed on both sides of the tread portion; a pair of bead portions each disposed on an inner side of the pair of sidewall portions in a tire radial direction; at least one carcass layer mounted between the pair of bead portions; a plurality of belt layers disposed on an outer circumferential side of the carcass layer in the tread portion; and a belt cushion layer disposed between end portions of the belt layers in a tire width direction and the carcass layer. A tread rubber constituting the tread portion is composed of a rubber composition in which 60 parts by mass or less of a filler containing carbon black and silica is blended per 100 parts by mass of a rubber component containing 90 mass% or more of isoprene-based rubber and in which a blending ratio between an amount of the carbon black and an amount of the silica in the filler ranges from 3:2 to 1:1. A belt cushion rubber constituting the belt cushion layer is composed of a rubber composition in which 45 parts by mass or less of a filler containing carbon black and silica is blended per 100 parts by mass of a rubber component containing 90 mass% or more of isoprene-based rubber. A hardness Hc of the tread rubber at 20°C and a hardness Hb of the belt cushion rubber at 20°C satisfy a relationship 1.2 ≤ Hc/Hb ≤ 1.5.

### Advantageous Effects of Invention

In the heavy-duty pneumatic tire of an embodiment of the present invention, the tread rubber is composed of a rubber composition in which 60 parts by mass or less of a filler containing carbon black and silica is blended per 100 parts by mass of a rubber component containing 90 mass% or more of isoprene-based rubber, and a blending ratio between an amount of the carbon black and an amount of the silica in the filler ranges from 3:2 to 1:1, thereby suppressing heat generation in the tread portion and improving rolling resistance. The belt cushion rubber is composed of a rubber composition in which 45 parts by mass or less of a filler containing carbon black and silica is blended per 100 parts by mass of a rubber component containing 90 mass% or more of isoprene-based rubber, thereby making it possible to enhance the shoulder portion and improve uneven wear resistance. Furthermore, since a hardness ratio Hc/Hb of the tread rubber and the belt cushion rubber is set in an appropriate range of 1.2 or more and 1.5 or less, the aforementioned uneven wear resistance can be favorably exhibited while ensuring durability. The synergy between them allows rolling resistance, uneven wear resistance performance, and durability to be maintained or improved, and all of them to be provided in a well-balanced manner.

In the present invention, it is preferable that a rubber composition constituting the tread rubber contains a guanidine-based vulcanization accelerator and a sulfenamide-based vulcanization accelerator, and a blended amount Ac_{G} of the guanidine-based vulcanization accelerator and a blended amount Ac_{S} of the sulfenamide-based vulcanization accelerator satisfy a relationship 0.3 ≤ Ac_{G}/Ac_{S} ≤ 5.0. This improves the rubber physical properties of the tread rubber, which is advantageous for providing low rolling resistance and chipping resistance in a compatible manner.

In the present invention, it is preferable that a plurality of circumferential grooves extending along the tire circumferential direction are formed on a surface of the tread portion, and a pair of the plurality of circumferential grooves each disposed on an outermost side in the tire width direction are defined as shoulder main grooves, a shoulder land portion is defined on an outer side of each of the shoulder main grooves in the tire width direction, and a width Wsh of each shoulder land portion and a ground contact width W of the tread portion satisfy a relationship 0.15 ≤ Wsh/W ≤ 0.27. Accordingly, the land portion (amount of rubber) disposed in the shoulder region, which contributes to uneven wear resistance performance, is optimized, which is advantageous for improving uneven wear resistance.

In the present invention, it is preferable that the plurality of circumferential grooves include the shoulder main grooves and center circumferential grooves disposed on inner sides of the shoulder main grooves in the tire width direction, and a groove width Wo of the shoulder main groove and a groove width Wi of the center circumferential groove satisfy a relationship 0.15 ≤ Wi/Wo ≤ 0.24. Providing grooves in this manner is advantageous for improving uneven wear resistance.

In the present invention, it is preferable that a tread gauge Gcc measured on a tire equator is 12.0 mm or more and 30.0 mm or less. This ensures a sufficient amount of rubber in the tread rubber, which is advantageous for improving uneven wear resistance. The tread gauge Gcc is a thickness of tread rubber measured on the tire equator, and is a distance measured on the tire equator from an outer surface of a tread layer to an outermost surface in the tire radial direction of a layer located on the outermost side in the tire radial direction among various reinforcing layers (a carcass layer, a belt layer, a belt reinforcing layer, and the like) that constitute the tire.

In the present invention, a ground contact length in a tread center land portion row is defined as Lc, a ground contact length in a land portion row on an outermost side in a tire axial direction is defined as Ls, and it is preferable that the maximum ground contact length Lc and the outer ground contact length Ls satisfy a relationship 0.80 ≤ Ls/Lc ≤ 1.05. This ensures a sufficient ground contact length of the shoulder portion when the tire is in contact with the ground, which is advantageous for improving uneven wear resistance.

In the present invention, the "ground contact width" and the "ground contact length" of the tread portion refer to a length in the tire axial direction (ground contact width) of a ground contact region and a length in the tire circumferential direction (ground contact length) of the ground contact region when the tire is mounted on a regular rim, inflated to a regular internal pressure, placed vertically on a flat surface, and subjected to a regular load. Specifically, the ground contact width W is the distance in the tire width direction between the ground contact edges measured under the above conditions, and the width Wsh of the shoulder land portion is the distance in the tire width direction between the inner end of each shoulder land portion in the tire width direction (the groove wall on the outer side in the tire width direction of the shoulder main groove that defines the shoulder land portion) and the ground contact edge. The ground contact length Lc is measured as a circumferential length at the center position in the tire width direction of the tread center land portion included in the ground contact region under the above conditions. The ground contact length Ls is measured as a circumferential length at the center position in the tire width direction of the land portion row on the outermost side in the tire axial direction included in the ground contact region under the above conditions. The "regular rim" refers to a rim determined for each tire by the respective standards, in the standard system including the standards on which the tire is based, such as a standard rim in the case of JATMA, a "Design Rim" in the case of TRA, or a "Measuring Rim" in the case of ETRTO. The "regular internal pressure" refers to an air pressure determined for each tire by the respective standards, in the standard system including the standards on which the tire is based, and is the maximum air pressure in the case of JATMA, the maximum value listed in the table "TIRE LOAD LIMITS AT VARIOUS COLD INFLATION PRESSURES" in the case of TRA, and the "INFLATION PRESSURE" in the case of ETRTO. However, when the tire is for a passenger car, the regular internal pressure is set to 180 kPa. The "regular load" is the load determined for each tire by the respective standards, in the standard system including the standards on which the tire is based, and is the maximum load capacity in the case of JATMA, the maximum value listed in the table "TIRE LOAD LIMITS AT VARIOUS COLD INFLATION PRESSURES" in the case of TRA, and the "LOAD CAPACITY" in the case of ETRTO. However, when the tire is for a passenger car, the regular load is a load equivalent to 88% of the above load.

### Brief Description of Drawings

FIG. 1 is a meridian cross-sectional view illustrating an example of a heavy-duty pneumatic tire according to an embodiment of the present invention.
FIG. 2 is a front view illustrating an example of a tread portion of a heavy-duty pneumatic tire according to an embodiment of the present invention.

### Description of Embodiments

Configurations of embodiments of the present invention will be described in detail below with reference to the accompanying drawings.

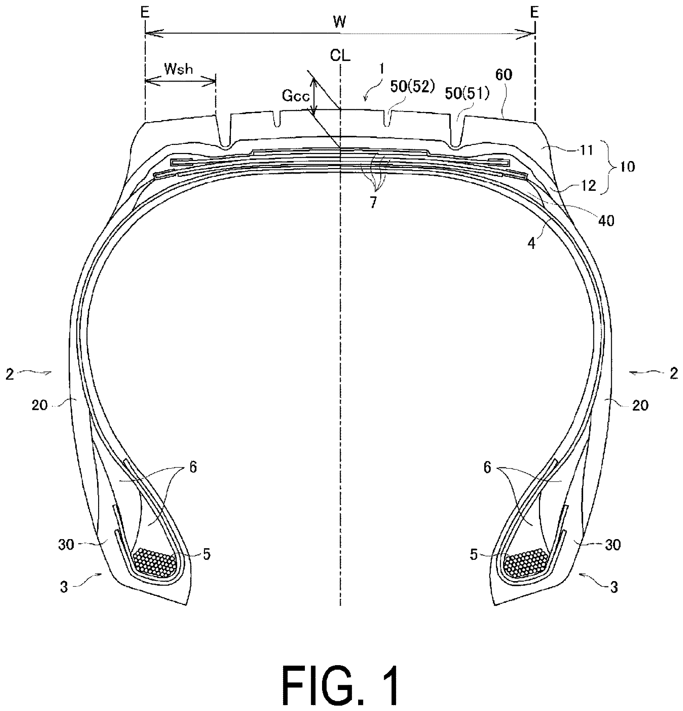

As illustrated in FIG. 1, a heavy-duty pneumatic tire of an embodiment of the present invention includes a tread portion 1 that contacts a road surface, a pair of sidewall portions 2 respectively disposed on both sides of the tread portion 1, and a pair of bead portions 3 each disposed on the inner side of the sidewall portions 2 in a tire radial direction. In FIG. 1, a reference sign CL denotes a tire equator, and a reference sign E denotes a ground contact edge. Note that although not illustrated in FIG. 1, which is a meridian cross-sectional view, the tread portion 1, the sidewall portions 2, and the bead portions 3 each extend in the tire circumferential direction and have an annular shape, thereby forming a toroidal basic structure of the pneumatic tire. Hereinafter, although the description using FIG. 1 is basically based on the illustrated meridian cross-sectional shape, all of the tire components extend in the tire circumferential direction and have an annular shape.

A carcass layer 4 is mounted between the pair of left and right bead portions 3. The carcass layer 4 includes a plurality of reinforcing cords extending in the tire radial direction, and is folded back around a bead core 5 disposed in each of the bead portions 3 from an inner side to an outer side in the tire width direction. A bead filler 6 is disposed on the outer periphery of the bead core 5, and the bead filler 6 is enveloped by a body portion and a folded back portion of the carcass layer 4.

A plurality of belt layers 7 (in FIG. 1, four layers) are embedded on an outer periphery side of the carcass layer 4 in the tread portion 1. Each belt layer 7 includes a plurality of reinforcing cords (steel cords) oriented in a predetermined direction. The plurality of belt layers 7 may include a crossed belt pair. The crossed belt pair is a combination of at least two belt layers configured such that the inclination angle of the reinforcing cord with respect to the tire circumferential direction is set in a range of 10° to 40°, and that the reinforcing cords intersect each other with the inclination directions of the reinforcing cords opposite to each other between the layers. In addition to the crossed belt pair, it is also possible to optionally provide a high-angle belt layer in which the inclination angle of the reinforcing cord with respect to the tire circumferential direction is set in a range of 40° to 70°, a protective belt layer disposed as an outermost layer with a width of 85% or less of other belt layers, a circumferential reinforcing layer in which the angle of the reinforcing cord with respect to the tire circumferential direction is set in a range of 0° to 5°, and the like. For example, in FIG. 1, one protective belt layer is disposed as the outermost layer, one high-angle belt layer is disposed as the innermost layer, and the crossed belt pair is provided as the other two layers. Further, a belt reinforcing layer (not illustrated) may be provided on the outer periphery side of the belt layer 7. The belt reinforcing layer may be composed of an organic fiber cord oriented in the tire circumferential direction, for example. The angle of the organic fiber cords constituting a belt reinforcing layer 8 with respect to the tire circumferential direction can be set to, for example, from 0° to 5°.

A tread rubber layer 10 is disposed on the outer circumferential side of the carcass layer 4 in the tread portion 1. A side rubber layer 20 is disposed on the outer circumferential side (outer side in the tire width direction) of the carcass layer 4 in each of the sidewall portions 2. A rim cushion rubber layer 30 is disposed on the outer circumferential side (outer side in the tire width direction) of the carcass layer 4 in each of the bead portions 3. A belt cushion layer 40 is disposed in a region having a substantially triangular cross section between an end portion of the belt layer 7 in the tire width direction and the carcass layer 4. The tread rubber layer 10 may have a structure in which two types of rubber layers having different physical properties (a cap-tread layer 11 constituting a road contact surface of the tread portion 1 and an under-tread layer 12 disposed on an inner peripheral side of the cap-tread layer 11) are stacked in the tire radial direction.

Since the present invention mainly relates to the tread rubber layer 10 (particularly the cap-tread layer 11) and the belt cushion layer 40, as long as the tread portion 1 (the tread rubber layer 10) is composed of the cap-tread layer 11 and the under-tread layer 12 and includes the belt cushion layer 40, the basic structure of the other parts is not limited to the above-mentioned structure.

In the present invention, the tread rubber is a rubber constituting the tread rubber layer 10 described above. In addition, when the tread portion 1 (the tread rubber layer 10) is composed of the cap-tread layer 11 and the under-tread layer 12, the term refers to the rubber that constitutes the cap-tread layer 11. A rubber composition constituting this tread rubber contains a diene rubber as a rubber component and necessarily contains an isoprene-based rubber in particular. It may optionally contain a butadiene rubber or a styrene butadiene rubber.

As the isoprene-based rubber used for the tread rubber, rubber usually used for rubber compositions for tires can be used. Examples of the isoprene-based rubber can include various types of natural rubber, epoxidized natural rubber, and various types of synthetic polyisoprene rubber. The content of the isoprene-based rubber is 90 mass% or more, preferably 93 mass% to 100 mass%, where the total rubber component in the rubber composition constituting the tread rubber is 100 mass%. When the isoprene-based rubber is contained in a specific amount as described above, wear resistance and fuel economy can be achieved in a well-balanced manner. When the content of the isoprene-based rubber is less than 90 mass%, chipping resistance is deteriorated.

Silica and carbon black are necessarily blended in as fillers in the tread rubber. The inclusion of silica as a filler in the tread rubber is advantageous for improving fuel economy performance. The inclusion of carbon black as a filler in the tread rubber is advantageous for improving uneven wear resistance. The fillers necessarily include silica and carbon black as described above, but other fillers may also be blended in. Examples of the other fillers include calcium carbonate, magnesium carbonate, talc, clay, alumina, aluminum hydroxide, titanium oxide, and calcium sulfate. These other fillers may be used alone or in combination of two or more types.

The blended amount of the filler used in the tread rubber (the total of the blended amounts of silica and carbon black) is 60 parts by mass or less, preferably 40 parts by mass to 60 parts by mass, and more preferably 45 parts by mass to 60 parts by mass, per 100 parts by mass of the rubber component. When the blended amount of the filler exceeds 60 parts by mass, heat buildup and processability are reduced.

When silica and carbon black are blended in as fillers, a blending ratio between an amount of the carbon black and an amount of the silica in the filler is set to 3:2 to 1:1, preferably 4:3 to 1:1. In other words, the blended amount of the carbon black in the filler is set to 1 time to 1.5 times, preferably 1 time to 1.3 times, the blended amount of the silica in the filler. In this way, blending carbon black and silica in an appropriate ratio is advantageous for providing low rolling resistance and uneven wear resistance in a compatible manner. When the blending ratio between the amount of the carbon black and the amount of the silica in the filler is outside the above range, low rolling resistance or uneven wear resistance is deteriorated.

The blended amount of the carbon black used as a filler in the tread rubber is preferably 50 mass% to 60 mass%, and more preferably 50 mass% to 56 mass%, where the total amount of fillers used in the tread rubber is 100 mass%. When the content of the carbon black is less than 50 mass%, the effect of improving uneven wear resistance is limited. When the content of the carbon black exceeds 60 mass%, the effect of improving low rolling resistance is limited. The blended amount of the carbon black per 100 parts by mass of the rubber component constituting the tread rubber is preferably 23 parts by mass to 35 parts by mass and more preferably 28 parts by mass to 35 parts by mass. When the blended amount of the carbon black is less than 23 parts by mass per 100 parts by mass of the rubber component, the effect of improving uneven wear resistance is limited. When the blended amount of the carbon black exceeds 36 parts by mass per 100 parts by mass of the rubber component, the effect of improving low rolling resistance is limited.

A nitrogen adsorption specific surface area N₂SA of the carbon black used in the tread rubber is not particularly limited, but is preferably 85 m²/g to 150 m²/g and more preferably 85 m²/g to 120 m²/g. In this way, the combined use of carbon black with an appropriate particle size is advantageous for providing uneven wear resistance and low rolling resistance in a compatible manner. When the nitrogen adsorption specific surface area N₂SA of the carbon black is less than 85 m²/g, the effect of improving wear resistance cannot be sufficiently expected. When the nitrogen adsorption specific surface area N₂SA of the carbon black exceeds 150 m²/g, the effect of improving low rolling resistance cannot be sufficiently expected. The nitrogen adsorption specific surface area N₂SA of the carbon black is measured in accordance with JIS K6217-2.

As the silica used as a filler in the tread rubber, silica that is usually used in rubber compositions for tires can be used. Examples of the silica include wet silica (hydrous silicic acid), dry silica (silicic anhydride), calcium silicate, and aluminum silicate. These may be used alone or in combination of two or more types.

The content of the silica used in the tread rubber is preferably 40 mass% to 50 mass%, and more preferably 40 mass% to 45 mass%, where the total amount of the filler is 100 mass%. When the content of the silica is less than 40 mass%, the effect of improving fuel economy performance is limited. When the content of the silica exceeds 50 mass%, the effect of improving uneven wear resistance is limited. The blended amount of the silica per 100 parts by mass of the rubber component constituting the tread rubber is preferably 18 parts by mass to 30 parts by mass, and more preferably 20 parts by mass to 28 parts by mass. By including a sufficient amount of the silica in the entire tread rubber in this way, it is possible to further improve fuel economy performance. When the blended amount of the silica is less than 18 parts by mass, the effect of improving fuel economy performance is limited. When the blended amount of the silica exceeds 30 parts by mass, the effect of improving uneven wear resistance is limited.

The CTAB adsorption specific surface area of the silica used in the tread rubber is not particularly limited, but is preferably 150 m²/g to 220 m²/g and more preferably 150 m²/g to 180 m²/g. When the CTAB adsorption specific surface area of the silica is less than 150 m²/g, the effect of improving uneven wear resistance may not be sufficiently obtained. When the CTAB adsorption specific surface area of the silica exceeds 220 m²/g, the effect of improving low rolling resistance may not be sufficiently obtained. In the present specification, the CTAB adsorption specific surface area of silica is a value measured in accordance with ISO 5794.

In the tread rubber, it is preferable to blend a silane coupling agent together with silica. When the silane coupling agent is blended in together with the silica, the dispersibility of the silica in the rubber components can be improved, and wear resistance and fuel economy performance can be improved in a well-balanced manner. The type of silane coupling agent is not particularly limited as long as the silane coupling agent can be used in a silica-containing rubber composition. Examples of the silane coupling agent include sulfur-containing silane coupling agents, such as bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltriethoxysilane.

When a silane coupling agent is blended in the tread rubber, the blended amount of the silane coupling agent is not particularly limited, but is preferably 1 mass% to 20 mass% and more preferably 5 mass% to 15 mass%, with respect to the blended amount of the silica. When the blended amount of the silane coupling agent is less than 1 mass% with respect to the blended amount of the silica, the dispersion of the silica cannot be sufficiently improved. When the blended amount of the silane coupling agent exceeds 20 mass% with respect to the blended amount of the silica, the silane coupling agent undergoes condensation, and thus a desired tensile strength cannot be obtained in the rubber composition.

In the tread rubber, it is preferable to blend a guanidine-based vulcanization accelerator and a sulfenamide-based vulcanization accelerator as a vulcanization accelerator. Examples of the guanidine-based vulcanization accelerator include diphenylguanidine (DPG), di(o-tolyl)guanidine-based, and o-tolylbiguanide. Examples of the sulfenamide-based vulcanization accelerator include N,N-dicyclohexyl-1,3-benzothiazole-2-sulfenamide-based (DZ), N-cyclohexyl-2-benzothiazolesulfenamide (CZ), N-oxydiethylene-2-benzothiazolesulfenamide (OBS), and N-(tert-butyl)benzothiazole-2-sulfenamide-based (NS). In this way, the combined use of two types of vulcanization accelerators, namely, the guanidine-based vulcanization accelerator and the sulfenamide-based vulcanization accelerator, is advantageous for achieving both low rolling resistance and chipping resistance in a compatible manner.

When a guanidine-based vulcanization accelerator and a sulfenamide-based vulcanization accelerator are used in combination, a blended amount Ac_{G} of the guanidine-based vulcanization accelerator and a blended amount Acs of the sulfenamide-based vulcanization accelerator preferably satisfy a relationship 0.3 ≤ Ac_{G}/Ac_{S} ≤ 5.0 and more 0.4 ≤ Ac_{G}/Ac_{S} ≤ 2.0. This improves the rubber physical properties of the tread rubber, which is advantageous for providing low rolling resistance and chipping resistance in a compatible manner. When the ratio Ac_{G}/Ac_{S} of the blended amounts is less than 0.3, the reaction between the sulfenamide-based vulcanization accelerator and the silane coupling agent results in excessive tread hardness, and the effect of improving uneven wear resistance is limited. When the ratio Ac_{G}/Ac_{S} of the blended amounts exceeds 5.0, the vulcanization rate increases, causing the tread portion to be over-vulcanized, and the effect of improving low rolling resistance is limited.

The blended amount of each of the guanidine-based vulcanization accelerator and the sulfenamide-based vulcanization accelerator is not particularly limited, but the blended amount of the guanidine-based vulcanization accelerator is preferably 0.2 parts by mass to 1.2 parts by mass and more preferably 0.4 parts by mass to 1.0 parts by mass, per 100 parts by mass of the rubber composition constituting the tread rubber. The blended amount of the sulfenamide-based vulcanization accelerator is preferably 0.6 parts by mass to 1.6 parts by mass and more preferably 0.8 parts by mass to 1.2 parts by mass, per 100 parts by mass of the rubber composition constituting the tread rubber. Furthermore, the total of the blended amounts of the guanidine-based vulcanization accelerator and the sulfenamide-based vulcanization accelerator is preferably 1.4 parts by mass to 2.0 parts by mass and more preferably 1.6 parts by mass to 2.0 parts by mass, per 100 parts by mass of the rubber composition constituting the tread rubber. In this way, blending an appropriate amount of the vulcanization accelerator is advantageous for providing low rolling resistance and uneven wear resistance in a compatible manner.

In the present invention, the belt cushion rubber is the rubber that constitutes the belt cushion layer 40 described above. The rubber composition constituting this belt cushion rubber contains a diene rubber as a rubber component and necessarily contains an isoprene-based rubber in particular. It may also optionally contain a butadiene rubber.

As the isoprene-based rubber used for the belt cushion rubber, rubbers that are usually used for rubber compositions for tires can be used. Examples of the isoprene rubber can include various types of natural rubber, epoxidized natural rubber, and various types of synthetic polyisoprene rubber. The content of the isoprene-based rubber is 90 mass% or more, preferably 93 mass% to 100 mass%, where the total rubber component in the rubber composition constituting the belt cushion rubber is 100 mass%. When the isoprene-based rubber is contained in a specific amount as described above, wear resistance and fuel economy can be achieved in a well-balanced manner. When the content of the isoprene-based rubber is less than 90 mass%, durability is deteriorated.

Carbon black is necessarily blended in as a filler in the belt cushion rubber. The inclusion of carbon black as a filler in the belt cushion rubber is advantageous for improving durability. The filler necessarily includes carbon black as described above, but other fillers may also be blended in. Examples of other fillers include silica, calcium carbonate, magnesium carbonate, talc, clay, alumina, aluminum hydroxide, titanium oxide, and calcium sulfate. These other fillers may be used alone or in combination of two or more types.

The blended amount of the carbon black used in the belt cushion rubber is 45 parts by mass or less, preferably 30 parts by mass to 45 parts by mass and more preferably 35 parts by mass to 45 parts by mass, per 100 parts by mass of the rubber component constituting the belt cushion rubber. When the blended amount of the carbon black exceeds 45 parts by mass, heat buildup and processability are reduced. In the belt cushion rubber, a plurality of types of carbon black may be blended in, and in that case, the total of blended amounts of the plurality of types of carbon black may satisfy the above range. When carbon black is used in combination with other fillers, particularly when carbon black is used in combination with silica, the blended amount of the filler (the total of blended amounts of the silica and the carbon black) is preferably set to 45 parts by mass or less per 100 parts by mass of the rubber component constituting the belt cushion rubber.

The nitrogen adsorption specific surface area N₂SA of the carbon black used in the belt cushion rubber is not particularly limited but is preferably 40 m²/g to 95 m²/g and more preferably 65 m²/g to 80 m²/g. In this way, the use of carbon black with an appropriate particle size is advantageous for providing low rolling resistance and durability in a compatible manner. When the nitrogen adsorption specific surface area N₂SA of the carbon black is less than 40 m²/g, the effect of improving durability cannot be sufficiently expected. When the nitrogen adsorption specific surface area N₂SA of the carbon black exceeds 95 m²/g, the effect of improving low rolling resistance cannot be sufficiently expected. The nitrogen adsorption specific surface area N₂SA of the carbon black is measured in accordance with JIS K6217-2.

The carbon black used in the belt cushion rubber preferably has a particle size different from that of the carbon black used in the tread rubber. Specifically, it is preferable that the nitrogen adsorption specific surface area N₂SA of the carbon black used in the belt cushion rubber is smaller than the nitrogen adsorption specific surface area N₂SA of the carbon black used in the tread rubber. By using different types of carbon black for the tread rubber and the belt cushion rubber in this way, it is possible to impart rubber physical properties suitable for each member.

The heavy-duty pneumatic tire of an embodiment of the present invention includes the tread rubber layer 10 composed of the above-mentioned tread rubber and the belt cushion layer 40 composed of the above-mentioned belt cushion rubber, and in including these two layers, a hardness Hc of the tread rubber at 20°C and a hardness Hb of the belt cushion rubber at 20°C satisfy the relationship 1.20 ≤ Hc/Hb ≤ 1.50, and preferably satisfy the relationship 1.20 ≤ Hc/Hb ≤ 1.40. By setting a hardness ratio Hc/Hb of the tread rubber and the belt cushion rubber in an appropriate range in this way, the aforementioned uneven wear resistance can be favorably exhibited while ensuring durability. When the hardness ratio Hc/Hb is less than 1.20 or exceeds 1.50, durability decreases.

Although there are no particular limitations on the hardness of each rubber layer, the hardness Hc of the tread rubber at 20°C is preferably 62 to 72 and more preferably 64 to 70. In this way, the tread rubber having an appropriate hardness is advantageous for improving uneven wear resistance. When the hardness Hc is less than 62 or exceeds 72, the uneven wear resistance decreases. Similarly, the hardness Hb of the belt cushion rubber at 20°C is preferably 50 to 60 and more preferably 50 to 57. In this way, the belt cushion rubber having an appropriate hardness is advantageous for improving durability. When the hardness Hb is less than 50 or exceeds 60, the durability decreases.

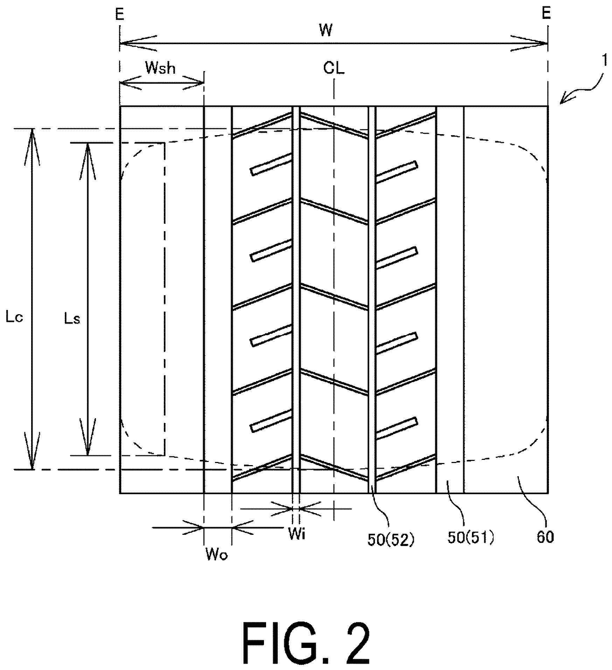

The heavy-duty pneumatic tire of an embodiment of the present invention is not particularly limited in structure as long as the heavy-duty pneumatic tire includes the tread rubber layer 10 composed of the above-mentioned tread rubber and the belt cushion layer 40 composed of the above-mentioned belt cushion rubber, but preferably has a structure as illustrated in FIGS. 1 and 2, in which a plurality of (four in the drawing) circumferential grooves 50 extending along the tire circumferential direction are formed on the surface of the tread portion, and a pair of the plurality of circumferential grooves 50 each disposed on the outermost side in the tire width direction are defined as shoulder main grooves 51, and a shoulder land portion 60 is defined on the outer side of each of the shoulder main grooves 51 in the tire width direction. In this case, a width Wsh of each shoulder land portion 60 and a ground contact width W of the tread portion 1 preferably satisfy a relationship 0.15 ≤ Wsh/W ≤ 0.27 and more preferably 0.18 ≤ Wsh/W ≤ 0.24. By having such a structure, the land portion (amount of rubber) disposed in the shoulder region, which contributes to uneven wear resistance performance, is optimized, which is advantageous for improving uneven wear resistance. When the ratio Wsh/W is less than 0.15, the amount of rubber in the shoulder land portion 60 that contributes to uneven wear resistance performance cannot be ensured sufficiently, and uneven wear resistance decreases. When the ratio Wsh/W exceeds 0.27, the wet performance (traction performance on wet road surfaces) decreases.

In particular, as illustrated in FIG. 1, the plurality of circumferential grooves 50 may include, in addition to the pair of shoulder main grooves 51, a plurality of (two in the drawing) center circumferential grooves 52 disposed on the inner sides of the shoulder main grooves 51 in the tire width direction. When such center circumferential grooves 52 are included, it is preferable that the center circumferential grooves 52 each have a groove width smaller than that of the shoulder main grooves 51. Specifically, a groove width Wo of the shoulder main grooves 51 and a groove width Wi of the center circumferential grooves 52 preferably satisfy a relationship 0.20 ≤ Wi/Wo ≤ 1.20 and more preferably 0.20 ≤ Wi/Wo ≤ 0.90. Setting the groove width of the plurality of circumferential grooves 50 in an appropriate range in this way is advantageous for providing wet performance and low rolling resistance in a compatible manner. When the ratio Wi/Wo of the groove widths is less than 0.20, wet performance decreases. When the ratio Wi/Wo of the groove widths exceeds 1.20, low rolling resistance decreases. Although there are no particular limitations on the individual groove widths of the respective grooves, the groove width Wo of the shoulder main groove 51 can be set to, for example, 10.5 mm to 14.0 mm, and the groove width Wi of the center circumferential groove 52 can be set to, for example, 3.5 mm to 14.5 mm.

As illustrated in FIG. 1, the thickness of the tread rubber measured on the tire equator CL is defined as a tread rubber gauge Gcc, and the tread gauge Gcc is preferably 12.0 mm or more and 30.0 mm or less and more preferably 16.0 mm or more and 30.0 mm or less. Ensuring a sufficient amount of rubber in the tread rubber in this way is advantageous for improving wear resistance. When the tread gauge Gcc is less than 12.0 mm, the wear resistance decreases. When the tread gauge Gcc exceeds 30.0 mm, the low rolling resistance decreases.

In FIG. 2, the region indicated by the broken line schematically shows a ground contact shape (ground contact region) when the heavy-duty pneumatic tire of an embodiment of the present invention is mounted on a regular rim, inflated to a regular internal pressure, placed vertically on a flat surface, and subjected to a regular load. In this ground contact shape, the ground contact length in the tread center land portion row is defined as Lc, the ground contact length in the land portion row on the outermost side in the tire axial direction is defined as Ls, in the heavy-duty pneumatic tire of an embodiment of the present invention, and the maximum ground contact length Lc and the outer ground contact length Ls preferably satisfy the relationship 0.80 ≤ Ls/Lc ≤ 1.05 and more preferably 0.85 ≤ Ls/Lc ≤ 1.00. This ensures a sufficient ground contact length of the shoulder portion when the tire is in contact with the ground, which is advantageous for improving uneven wear resistance.

The heavy-duty pneumatic tire of an embodiment of the present invention can maintain or improve the rolling resistance, the uneven wear resistance performance, and the durability by the synergy between the compositions and physical properties of the tread rubber and the belt cushion rubber described above and the effects of the tire structure, and can provide all of them in a well-balanced manner.

The present invention will further be described below by way of examples, but the scope of the present invention is not limited to these examples.

### Example

Ten types of tread rubber (CAP1 to CAP10) with the blends shown in Table 1 and five types of belt cushion rubber (BC1 to BC5) with the blends shown in Table 2 were prepared, and test tires (tire size: 11R22.5) were produced using a tread layer composed of any of the tread rubber (CAP1 to CAP10) and a belt cushion layer composed of any of the belt cushion rubber (BC1 to BC5) in combination as shown in Tables 3 to 5. Each test tire has the basic structure shown in FIG. 1 and the tread pattern shown in FIG. 2, and the hardness Hc of the tread rubber, the hardness Hb of the belt cushion rubber, the hardness ratio Hc/Hb, the tread width W, the width Wsh of the shoulder land portion, the ratio Wsh/W of these widths, the tread gauge Gcc, the groove width Wo of the shoulder main groove, the groove width Wi of the center circumferential groove, the ratio Wi/Wo of these groove widths, and the ground contact length ratio Ls/Lc are set as shown in Tables 3 to 5, respectively.

Using each test tire, evaluation of low rolling resistance, uneven wear resistance, and durability was carried out by the methods described below.

### Low rolling resistance

Each test tire was mounted on a wheel with a rim size of 22.5 x 9.0, and the rolling resistance coefficient of the test tire was measured using a drum testing machine with a drum diameter of 1707 mm in accordance with ISO 28580 under conditions of a load of 28.76 kN, an air pressure of 900 kPa, and a speed of 60 km/h. Evaluation results were expressed as an index with Standard Example 1 being set at 100. The smaller this index value, the lower the rolling resistance, meaning that the tire has excellent low rolling resistance.

### Uneven wear resistance

Each test tire was mounted on a wheel with a rim size of 22.5 x 9.0, and attached to a test vehicle (2-D tractor head) with air pressure as an 830 kPa. After traveling 50000 km on a test course composed of a paved road surface, the wear amounts of the center circumferential grooves and shoulder main grooves (difference in groove depth of each groove before and after traveling) were measured at five points around the tire, and the difference between the wear amounts of the center circumferential grooves and the shoulder main grooves was calculated. Evaluation results were expressed as an index using the reciprocal of the measurement values, with Standard Example 1 being set at 100. The larger this index value, the smaller the difference in wear amount between the center region and the shoulder region, meaning that the tire has excellent uneven wear resistance.

### Durability

Each test tire was mounted on a wheel with a rim size of 22.5 x 9.0, and the mileage the tire can travel before breaking down was measured using a drum testing machine with a drum diameter of 1707 mm under conditions of a load of 41.19 kN, an air pressure of 830 kPa, a speed of 45 km/h, and a slip angle of ±2° (frequency 0.1 Hz). Evaluation results were expressed as an index with Standard Example 1 being set at 100. The higher the index value, the longer the mileage the tire can travel before breaking down, meaning that the tire has excellent durability.

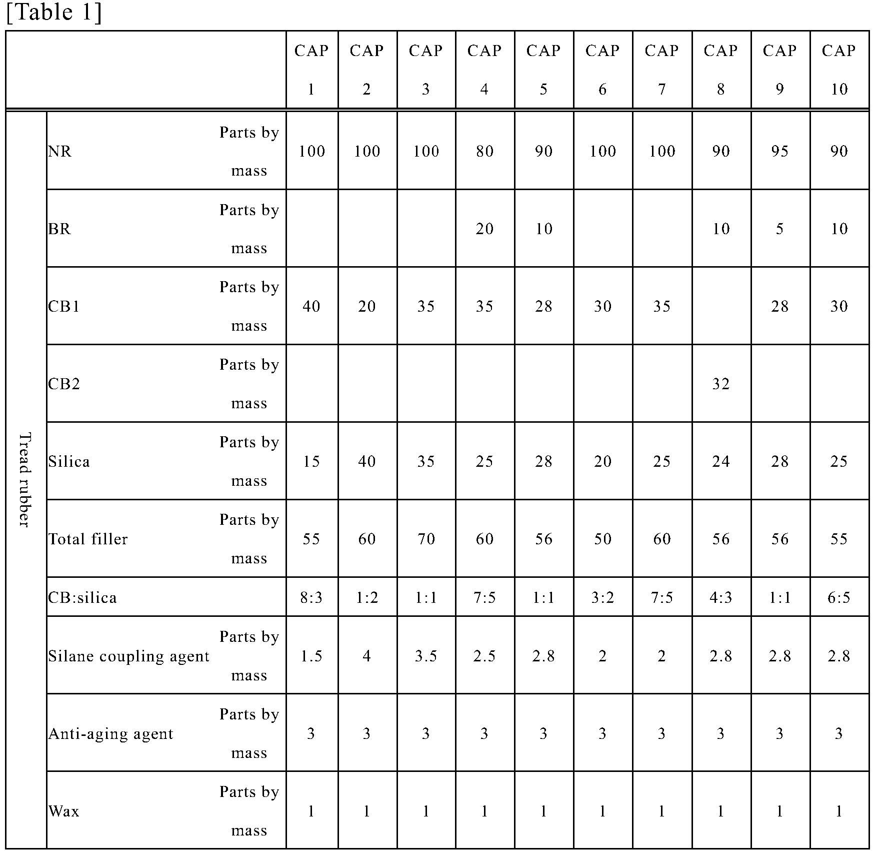

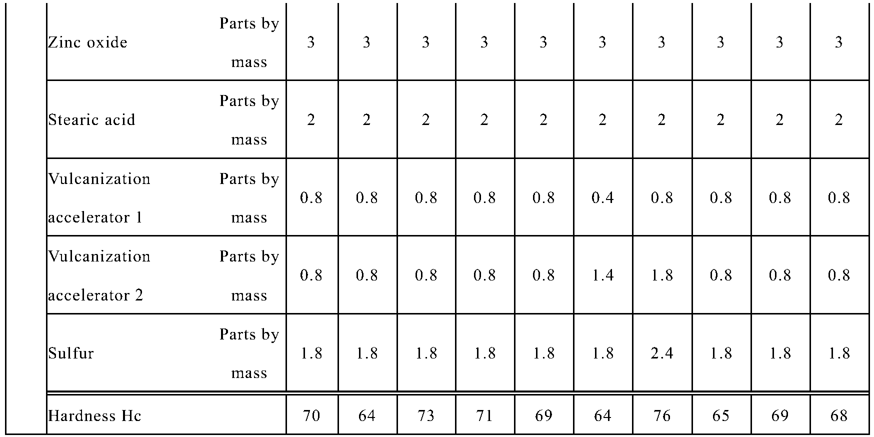

The types of raw materials used in Table 1 are shown below.
- NR: Natural rubber, RSS No. 3
- BR: Butadiene rubber, available from Nippon Zeon Co., Ltd., Nipol 1220
- CB1: Carbon black (grade: ISAF), Nitelon #300IH, available from Nippon Steel Carbon Co., Ltd. (Dst: 83 nm, nitrogen adsorption specific surface area N₂SA: 115 m²/g)
- CB2: Carbon black (grade: HAF), Nitelon #200IN, available from Nippon Steel Carbon Co., Ltd. (Dst: 114 nm, nitrogen adsorption specific surface area N₂SA: 72 m²/g)
- Silica: ZEOSIL 1165MP, available from Solvay Japan (CTAB adsorption specific surface area: 165 m²/g)
- Anti-aging agent: Santoflex 6PPD, available from Solutia Europe
- Wax: OZOACE-0015A, available from Nippon Seiro Co., Ltd.
- Zinc oxide: Zinc Oxide III, available from Seido Chemical Industry Co., Ltd.
- Stearic acid: Stearic acid: Stearic acid YR, available from NOF Corporation
- Vulcanization accelerator 1: Sulfenamide-based vulcanization accelerator Noccela NS-P (NS), available from Ouchi Shinko Chemical Co., Ltd.
- Vulcanization accelerator 2: Guanidine-based vulcanization accelerator, Soxinor D-G (DPG), available from Sumitomo Chemical Co., Ltd.
- Sulfur: Oil-treated sulfur, available from Karuizawa Refinery Ltd.

**[Table 2]**

| | | | BC 1 | BC 2 | BC 3 | BC 4 | BC 5 |
|---|---|---|---|---|---|---|---|
| | NR | Parts by mass | 100 | 80 | 100 | 90 | 95 |
| | BR | Parts by mass | | 20 | | 10 | 5 |
| | CB1 | Parts by mass | | | | 20 | |
| | CB2 | Parts by mass | 25 | 35 | 35 | 20 | 40 |
| | CB3 | Parts by mass | 25 | | | | |
| Belt cushion rubber | Total filler | Parts by mass | 50 | 35 | 35 | 40 | 40 |
| | Anti-aging agent | Parts by mass | 1 | 1 | 1 | 1 | 1 |
| | Oil | Parts by mass | 2 | 2 | 2 | 2 | 2 |
| | Zinc oxide | Parts by mass | 3.5 | 3.5 | 3.5 | 3.5 | 3.5 |
| | Stearic acid | Parts by mass | 1.5 | 1.5 | 1.5 | 1.5 | 1.5 |
| | Vulcanization accelerator 1 | Parts by mass | 1 | 1 | 1 | 1 | 1 |
| | Sulfur | Parts by mass | 2.5 | 2.5 | 2.5 | 2.5 | 2.5 |
| | Hardness Hb | | 55 | 50 | 50 | 57 | 53 |

The types of raw materials used in Table 2 are shown below.
- NR: Natural rubber, RSS No. 3
- BR: Butadiene rubber, available from Nippon Zeon Co., Ltd., Nipol 1220
- CB1: Carbon black (grade: ISAF), Nitelon #300IH, available from Nippon Steel Carbon Co., Ltd. (Dst: 83 nm, nitrogen adsorption specific surface area NS2A: 115 m²/g)
- CB2: Carbon black (grade: HAF), Nitelon #200IN, available from Nippon Steel Carbon Co., Ltd. (Dst: 114 nm, nitrogen adsorption specific surface area NS2A: 72 m²/g)
- CB3: Carbon black (grade: FAF), Nitelon #10N, available from Nippon Steel Carbon Co., Ltd. (Dst: 166 nm, nitrogen adsorption specific surface area NS2A: 41 m²/g)
- Anti-aging agent: Santoflex 6PPD, available from Solutia Europe
- Oil: Diana Process NH-70S, available from Idemitsu Kosan Co., Ltd.
- Zinc oxide: Zinc Oxide III, available from Seido Chemical Industry Co., Ltd.
- Stearic acid: Stearic acid YR, available from NOF Corporation
- Vulcanization accelerator 1: Noccela NS-P (NS), available from Ouchi Shinko Chemical Co., Ltd.
- Sulfur: Oil-treated sulfur, available from Karuizawa Refinery Ltd.

**[Table 3]**

| | Standard Example 1 | Example 1 | Example 2 | Example 3 | Example 4 | Example 5 | Example 6 | Example 7 | Example 8 |
|---|---|---|---|---|---|---|---|---|---|
| Types of tread rubber | CAP1 | CAPS | CAPS | CAP6 | CAPS | CAPS | CAPS | CAP7 | CAP7 |
| Types of belt cushion rubber | BC1 | BC3 | BC4 | BC3 | BC3 | BC3 | BC3 | BC4 | BC5 |
| Hardness Hc | 70 | 69 | 69 | 64 | 69 | 69 | 69 | 76 | 76 |
| Hardness Hb | 55 | 50 | 57 | 50 | 50 | 50 | 50 | 57 | 53 |
| Ratio Hc/Hb | 1.27 | 1.38 | 1.21 | 1.28 | 1.38 | 1.38 | 1.38 | 1.33 | 1.43 |
| Tread width W | 220 | 220 | 220 | 220 | 210 | 220 | 220 | 220 | 220 |
| Width Wsh of Shoulder land portion | 44 | 44 | 44 | 44 | 60 | 44 | 44 | 44 | 44 |
| Ratio Wsh/W | 0.20 | 0.20 | 0.20 | 0.20 | 0.29 | 0.20 | 0.20 | 0.20 | 0.20 |
| Tread gauge Gcc [mm] | 17 | 17 | 17 | 17 | 17 | 17 | 17 | 17 | 17 |
| Groove width Wo [mm] | 13 | 13 | 13 | 13 | 13 | 8 | 13 | 13 | 13 |
| Groove width Wi [mm] | 4 | 4 | 4 | 4 | 4 | 10 | 4 | 4 | 4 |
| Ratio Wi/Wo | 0.31 | 0.31 | 0.31 | 0.31 | 0.31 | 1.25 | 0.31 | 0.31 | 0.31 |
| Ground contact length ratio Ls/Lc | 0.90 | 0.90 | 0.90 | 0.90 | 0.90 | 0.90 | 0.60 | 0.60 | 0.90 |
| Low rolling resistance [index] | 100 | 88 | 92 | 85 | 88 | 91 | 87 | 94 | 93 |
| Uneven wear resistance [index] | 100 | 115 | 120 | 110 | 106 | 110 | 107 | 113 | 114 |
| Durability [index] | 100 | 111 | 106 | 110 | 106 | 110 | 108 | 100 | 98 |

**[Table 4]**

| | Example 9 | Example 10 | Example 11 | Example 12 | Example 13 | Example 14 | Example 15 | Example 16 | Example 17 | Example 18 |
|---|---|---|---|---|---|---|---|---|---|---|
| Types of tread rubber | CAP9 | CAP9 | CAP9 | CAP9 | CAP10 | CAP6 | CAP8 | CAP9 | CAP9 | CAP9 |
| Types of belt cushion rubber | BC3 | BC3 | BC3 | BC3 | BC3 | BC3 | BC3 | BC3 | BC3 | BC3 |
| Hardness Hc | 69 | 69 | 69 | 69 | 68 | 64 | 65 | 69 | 69 | 69 |
| Hardness Hb | 50 | 50 | 50 | 50 | 50 | 50 | 50 | 50 | 50 | 50 |
| Ratio Hc/Hb | 1.38 | 1.38 | 1.38 | 1.38 | 1.36 | 1.28 | 1.30 | 1.38 | 1.38 | 1.38 |
| Tread width W | 220 | 215 | 220 | 220 | 220 | 220 | 220 | 220 | 220 | 220 |
| Width Wsh of Shoulder land portion | 36 | 55 | 44 | 44 | 44 | 44 | 44 | 44 | 44 | 44 |
| Ratio Wsh/W | 0.16 | 0.26 | 0.20 | 0.20 | 0.20 | 0.20 | 0.20 | 0.20 | 0.20 | 0.20 |
| Tread gauge Gcc [mm] | 17 | 17 | 14 | 22 | 17 | 17 | 17 | 17 | 17 | 17 |
| Groove width Wo [mm] | 13 | 13 | 11 | 9 | 13 | 10 | 9 | 13 | 13 | 13 |
| Groove width Wi [mm] | 4 | 4 | 4 | 4 | 3 | 8 | 10 | 4 | 4 | 4 |
| Ratio Wi/Wo | 0.31 | 0.31 | 0.36 | 0.44 | 0.23 | 0.80 | 1.11 | 0.31 | 0.31 | 0.31 |
| Ground contact length ratio Ls/Lc | 0.90 | 0.90 | 0.90 | 0.90 | 0.90 | 0.90 | 0.90 | 0.80 | 1.00 | 1.05 |
| Low rolling resistance [index] | 94 | 85 | 83 | 93 | 90 | 93 | 92 | 86 | 84 | 84 |
| Uneven wear resistance [index] | 106 | 108 | 105 | 118 | 108 | 109 | 106 | 108 | 118 | 119 |
| Durability [index] | 115 | 108 | 110 | 106 | 110 | 112 | 116 | 111 | 107 | 106 |

**[Table 5]**

| | Comparative Example 1 | Comparative Example 2 | Comparative Example 3 | Comparative Comparative Example 4 | Example 5 | Comparative Example 6 | Comparative Example 7 | Comparative Example 8 |
|---|---|---|---|---|---|---|---|---|
| Types of tread rubber | CAP6 | CAP1 | CAP2 | CAP3 | CAP4 | CAPS | CAPS | CAP7 |
| Types of belt cushion rubber | BC4 | BC3 | BC3 | BC3 | BC3 | BC1 | BC2 | BC3 |
| Hardness Hc | 64 | 70 | 64 | 73 | 71 | 69 | 69 | 76 |
| Hardness Hb | 57 | 50 | 50 | 50 | 50 | 55 | 50 | 50 |
| Ratio Hc/Hb | 1.12 | 1.40 | 1.28 | 1.46 | 1.42 | 1.25 | 1.38 | 1.52 |
| Tread width W | 220 | 220 | 220 | 220 | 220 | 220 | 220 | 220 |
| Width Wsh of Shoulder land portion | 44 | 44 | 44 | 44 | 44 | 44 | 44 | 44 |
| Ratio Wsh/W | 0.20 | 0.20 | 0.20 | 0.20 | 0.20 | 0.20 | 0.20 | 0.20 |
| Tread gauge Gcc [mm] | 17 | 17 | 17 | 17 | 17 | 17 | 17 | 17 |
| Groove width Wo [mm] | 13 | 13 | 13 | 13 | 13 | 13 | 13 | 13 |
| Groove width Wi [mm] | 4 | 4 | 4 | 4 | 4 | 4 | 4 | 4 |
| Ratio Wi/Wo | 0.31 | 0.31 | 0.31 | 0.31 | 0.31 | 0.31 | 0.31 | 0.31 |
| Ground contact length ratio Ls/Lc | 0.90 | 0.90 | 0.90 | 0.90 | 0.90 | 0.90 | 0.90 | 0.90 |
| Low rolling resistance [index] | 88 | 99 | 80 | 102 | 91 | 93 | 89 | 94 |
| Uneven wear resistance [index] | 101 | 99 | 91 | 101 | 91 | 112 | 110 | 111 |
| Durability [index] | 93 | 93 | 101 | 101 | 102 | 93 | 90 | 90 |

As is clear from tables 3 to 5, Examples 1 to 18 maintained or improved low rolling resistance, uneven wear resistance, and durability compared to Standard Example 1, and provided these performance properties in a well- balaced manner.

On the other hand, in Comparative Example 1, the hardness ratio Hc/Hb was small, and therefore the durability was reduced. In Comparative Example 2, CAP1 (the blending ratio between the amount of the carbon black and the amount of the silica was outside the range of the present invention: the amount of carbon black was excessive) which does not satisfy the conditions of the present invention was used as the tread rubber, and therefore the uneven wear resistance and durability were reduced. In Comparative Example 3, CAP2 (the blending ratio between the amount of the carbon black and the amount of the silica was outside the range of the present invention: the amount of silica was excessive) which does not satisfy the conditions of the present invention was used as the tread rubber, and therefore the uneven wear resistance was reduced. In Comparative Example 4, CAP3 (the blended amount of filler was excessive) which does not satisfy the conditions of the present invention was used as the tread rubber, and therefore low rolling resistance was deteriorated. In Comparative Example 5, CAP4 (the content of isoprene-based rubber was too low) which does not satisfy the conditions of the present invention was used as the tread rubber, and therefore uneven wear resistance was reduced. In Comparative Example 6, BC1 (the blended amount of filler (total amount of carbon black) was excessive) which does not satisfy the conditions of the present invention was used as the belt cushion rubber, and therefore durability was reduced. In Comparative Example 7, BC2 (the content of isoprene-based rubber was too low) which does not satisfy the conditions of the present invention was used as the belt cushion rubber, and therefore durability was reduced. In Comparative Example 8, the hardness ratio Hc/Hb was large, and therefore the durability was reduced.

### Reference Signs List

1 Tread portion
2 Sidewall portion
3 Bead portion
4 Carcass layer
5 Bead core
6 Bead filler
7 Belt layer
8 Belt reinforcing layer
10 Tread rubber layer
11 Cap-tread layer
12 Under-tread layer
20 Side rubber layer
30 Rim cushion rubber layer
40 Belt cushion layer
50 Circumferential groove
51 Shoulder main groove
52 Center circumferential groove
CL Tire equator

## Claims

1. A heavy-duty pneumatic tire, comprising:
a tread portion extending in a tire circumferential direction and having an annular shape;
a pair of sidewall portions respectively disposed on both sides of the tread portion;
a pair of bead portions each disposed on an inner side of the pair of sidewall portions in a tire radial direction;
at least one carcass layer mounted between the pair of bead portions;
a plurality of belt layers disposed on an outer circumferential side of the carcass layer in the tread portion; and
a belt cushion layer disposed between end portions of the belt layers in a tire width direction and the carcass layer;
a tread rubber constituting the tread portion being composed of a rubber composition in which 60 parts by mass or less of a filler containing carbon black and silica is blended per 100 parts by mass of a rubber component containing 90 mass% or more of isoprene-based rubber and in which a blending ratio between an amount of the carbon black and an amount of the silica in the filler ranges from 3:2 to 1:1,
a belt cushion rubber constituting the belt cushion layer being composed of a rubber composition in which 45 parts by mass or less of carbon black is blended per 100 parts by mass of a rubber component containing 90 mass% or more of isoprene-based rubber, and
a hardness Hc of the tread rubber at 20°C and a hardness Hb of the belt cushion rubber at 20°C satisfying a relationship 1.2 ≤ Hc/Hb ≤ 1.5.

2. The heavy-duty pneumatic tire according to claim 1, wherein
the rubber composition constituting the tread rubber contains a guanidine-based vulcanization accelerator and a sulfenamide-based vulcanization accelerator, and
a blended amount Ac_{G} of the guanidine-based vulcanization accelerator and a blended amount Ac_{S} of the sulfenamide-based vulcanization accelerator satisfy a relationship 0.3 ≤ Ac_{G}/Ac_{S} ≤ 5.0.

3. The heavy-duty pneumatic tire according to claim 1 or 2, wherein
a plurality of circumferential grooves extending along the tire circumferential direction are formed on a surface of the tread portion, and
a pair of the plurality of circumferential grooves each disposed on an outermost side in the tire width direction are defined as shoulder main grooves, a shoulder land portion is defined on an outer side of each of the shoulder main grooves in the tire width direction, and a width Wsh of each shoulder land portion and a ground contact width W of the tread portion satisfy a relationship 0.15 ≤ Wsh/W ≤ 0.27.

4. The heavy-duty pneumatic tire according to claim 3, wherein
the plurality of circumferential grooves comprise the shoulder main grooves and center circumferential grooves disposed on inner sides of the shoulder main grooves in the tire width direction, and
a groove width Wo of the shoulder main grooves and a groove width Wi of the center circumferential grooves satisfy a relationship 0.20 ≤ Wi/Wo ≤ 1.20.

5. The heavy-duty pneumatic tire according to any one of claims 1 to 4, wherein a tread gauge Gcc measured on a tire equator is 12.0 mm or more and 30.0 mm or less.

6. The heavy-duty pneumatic tire according to any one of claims 1 to 5, wherein
a ground contact length in a tread center land portion row is defined as Lc,
a ground contact length in a land portion row on an outermost side in a tire axial direction is defined as Ls, and
the maximum ground contact length Lc and the outer ground contact length Ls satisfy a relationship 0.80 ≤ Ls/Lc ≤ 1.05.
